# DEMANDE DE BREVET EUROPEEN

(11) **EP 0 841 801 A1**
(43) Date de publication de la demande: **13.05.1998**
(21) Numéro de dépôt: 97202569.6
(22) Date de dépôt: 29.10.1997
(51) Int. Cl.: H04M 15/02, H04M 1/66

(54) **Procédé de restriction de durée des communications téléphoniques et équipement téléphonique utilisant un tel procédé**

(30) Priorité: 06.11.1996 FR 9613533
(71) Demandeur: PHILIPS ELECTRONICS N.V., 5621 BA Eindhoven (NL)
(72) Inventeur: Flon, Stéphane, 75008 Paris (FR)
(74) Mandataire: Chaffraix, Jean

(57) **Abrégé**

L'invention concerne un équipement téléphonique comportant des moyens de contrôle de coût des communications téléphoniques.

Conformément à l'invention, ce contrôle de coût consiste:
■ à fixer au moins un critère de restriction de durée applicable indépendamment à chaque communication,
■ à affecter une durée maximum autorisée à chaque communication faisant l'objet d'une telle restriction,
■ et à permettre d'interrompre une communication lorsque la durée maximum qui lui est affectée est écoulée.

Applications : tout équipement téléphonique, notamment téléphone mobile.

## Description

La présente invention concerne un équipement téléphonique comportant des moyens de contrôle de coût des communications téléphoniques ainsi qu'un procédé de contrôle de coût des communications téléphoniques.

L'invention a d'importantes applications puisqu'elle permet à un abonné à un réseau téléphonique de maîtriser le coût des communications effectuées à partir de son équipement téléphonique. Elle est particulièrement avantageuse lorsqu'elle est appliquée à des équipements téléphoniques mobiles qui par nature sont susceptibles d'être confiés à diverses personnes.

La demande de brevet anglais n°2 227 905, déposée au Royaume Uni le 21.01.1989 décrit un équipement destiné à être connecté en série avec un téléphone sur la ligne téléphonique. Cet équipement permet de fixer un montant total maximum à ne pas dépasser, pour l'ensemble des communications. Il affiche le montant courant, et lorsque le montant total maximum fixé est atteint, le fonctionnement du téléphone est bloqué dans le sens de l'émission. La valeur du montant courant peut être ré-initialisée à l'aide d'une clé.

Le mécanisme décrit présente plusieurs inconvénients. Tout d'abord il nécessite d'utiliser un équipement complémentaire et n'est applicable qu'à des téléphones classiques filaires ou sans fil. De plus, il n'offre qu'un contrôle global du coût des communications, et la restriction est imposée sur la base du montant des communications ce qui est relativement complexe à gérer étant donné la variété des tarifs en fonction des opérateurs, des plages horaires...

L'invention a pour but de proposer un équipement téléphonique qui intègre des moyens de contrôle de cout qui soient plus modulables, plus simples à mettre en oeuvre, et plus faciles à utiliser pour l'utilisateur du téléphone.

Pour cela, un équipement téléphonique selon l'invention et tel que décrit dans le paragraphe introductif est caractérisé en ce qu'il comporte:
■ des moyens permettant de fixer au moins un critère de restriction de durée applicable indépendamment à chaque communication,
■ des moyens pour affecter une durée maximum autorisée à chaque communication faisant l'objet d'une telle restriction,
■ des moyens pour permettre d'interrompre une communication lorsque la durée maximum qui lui est affectée est écoulée.

De même, un procédé selon l'invention de contrôle de coût des communications est caractérisé en ce qu'il consiste:
■ à fixer au moins un critère de restriction de durée applicable indépendamment à chaque communication,
■ à affecter une durée maximum autorisée à chaque communication faisant l'objet d'une telle restriction,
■ à permettre d'interrompre une communication lorsque la durée maximum qui lui est affectée est écoulée.

Selon l'invention, la maîtrise des coûts se fait donc en fixant des restrictions de durée de communication ce qui est beaucoup plus simple à gérer. Ces restrictions sont susceptibles d'être appliquées communication par communication, ce qui permet d'obtenir un contrôle plus efficace.

Dans un mode de réalisation particulièrement avantageux, un équipement téléphonique selon l'invention comporte des moyens pour fixer un critère de restriction de durée par catégorie, l'appartenance d'une communication à une catégorie étant déterminée à partir du numéro de téléphone du correspondant.

L'invention permet donc de ne restreindre que certaines catégories d'appel, ou de restreindre différemment les différentes catégories, par exemple les communications locales, les communications internationales...

Dans un autre mode de réalisation avantageux de l'invention, l'équipement téléphonique est doté d'un répertoire doté de fiches téléphoniques et il comporte des moyens pour fixer au moins un critère de restriction de durée pour une ou plusieurs fiche dudit répertoire.

De façon avantageuse, l'équipement téléphonique selon l'invention comporte:
■ au moins un compteur, dit compteur de communication,
■ des moyens d'initialisation dudit compteur de communication, pour chaque communication faisant l'objet d'une restriction de durée, avec la durée maximum autorisée,
■ des moyens pour décrémenter ledit compteur de communication au fur et à mesure de la communication,
■ des moyens d'affichage de la valeur dudit compteur de communication.

L'utilisateur de l'équipement connaît donc à tout instant la durée qui lui reste avant que la communication ne soit coupée, ce qui améliore grandement le confort d'utilisation de l'équipement.

Enfin dans un autre mode de réalisation intéressant, l'équipement téléphonique selon l'invention comporte:
■ des moyens pour fixer au moins une période de temps,
■ des moyens de cumul des durées de communication par catégorie sur ladite période,
■ des moyens pour fixer une durée maximale autorisée pour ladite période,
■ des moyens permettant d'interrompre une communication appartenant à ladite catégorie lorsque la durée maximum affectée à cette catégorie est écoulée pour ladite période,
■ des moyens permettant de bloquer les communications appartenant à ladite catégorie lorsque la durée maximum affectée à cette catégorie est écoulée pour ladite période.

Le cumul de la durée des communications par catégorie et par période offre une très grande flexibilité d'utilisation de l' équipement. Il est particulièrement intéressant dans un environnement professionnel notamment.

L'invention sera mieux comprise et d'autres détails apparaîtront à la lumière de la description qui va suivre en regard des dessins annexés qui sont donnés à titre d'exemple non limitatif et dans lesquels:
- la figure 1 représente un exemple d'équipement téléphonique selon l'invention,
- les figures 2 et 3 représentent le contenu d'une table dans laquelle sont stockés les différents paramètres relatifs aux restrictions qui ont été fixées,
- la figure 4 représente sous forme d'organigramme un exemple de réalisation d'un procédé selon l'invention.

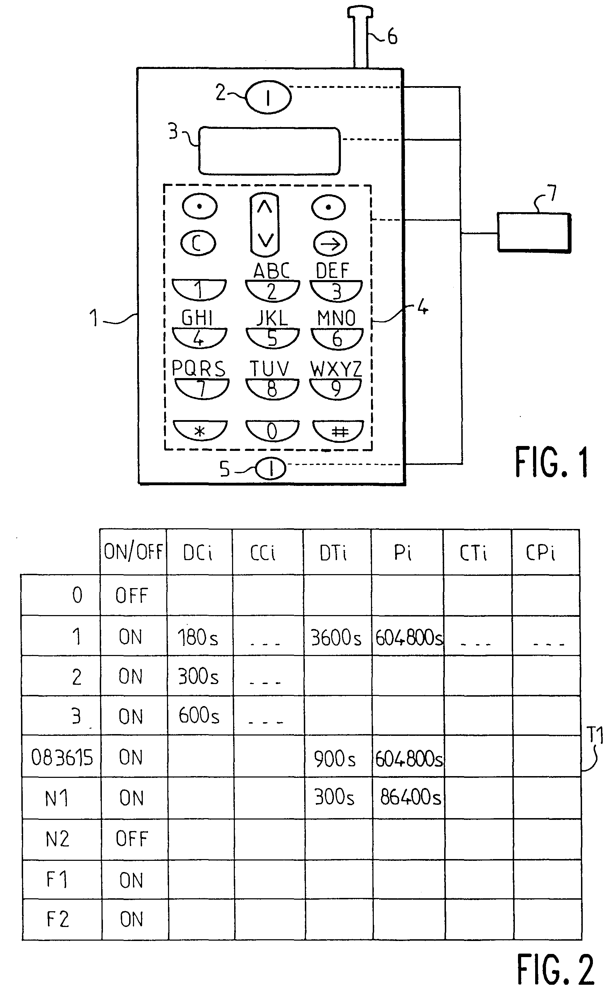

Sur la figure 1 on a représenté à titre d'exemple un équipement téléphonique 1 selon l'invention. Cet équipement est un téléphone mobile comportant un écouteur 2, un écran 3, un clavier 4, un micro 5, une antenne 6, et un ensemble à microprocesseur 7 qui assure son fonctionnement, et qui permet notamment de mettre en oeuvre un procédé selon l'invention de contrôle de coût des communications. A titre d'exemple, pour un téléphone cellulaire analogique conforme à la norme AMPS cet ensemble à microprocesseur est avantageusement constitué à partir d'un 8051 fabriqué par Philips Semiconductors.

Le téléphone décrit à titre d'exemple dans la suite de la description est doté d'un répertoire comportant des fiches téléphoniques. L'utilisateur dispose de deux méthodes pour émettre un appel: soit composer directement le numéro de téléphone correspondant sur le clavier du téléphone, soit sélectionner une fiche dans le répertoire. Ce répertoire est stocké dans une unité de mémoire de l'ensemble à microprocesseur 7, et les fiches sont identifiées dans le répertoire par un numéro de fiche.

Ce téléphone est également doté de diverses fonctions dont les paramètres sont réglables à partir d'un menu affiché à l'écran, et notamment d'une ou plusieurs fonctions de restriction de durée des communications. A titre d'exemple on va maintenant décrire le contenu d'un menu de restriction de durée des communications:

| Restriction de durée | | |
|---|---|---|
| → toute communication | | → durée par communication |
| → par catégorie | → internationale | → durée par communication |
| | | → durée par période |
| | → régionale | → durée par communication |
| | | → durée par période |
| | → locale | → durée par communication |
| | | → durée par période |
| → numéros | | → durée par communication |
| | | → durée par période |
| → exception | → numéro | |
| → alarme | → oui/non | |
| | → temps | |
| → affichage en cours de communication | | → temps restant |
| | | → temps écoulé |

Dans cet exemple, l'utilisateur a donc le choix de fixer différents critères de restriction de durée de communication. Ces critères sont susceptibles d'être fixés pour chaque communication indépendamment, en tenant éventuellement compte de la catégorie à laquelle appartient la communication, l'appartenance d'une communication à une catégorie (locale, régionale, internationale...) étant déterminée à partir du numéro de téléphone du correspondant. Les restrictions définies par catégorie sont susceptibles de s'appliquer communication par communication ou sur les durées cumulées des communications de la catégorie pendant une période fixée par l'utilisateur (jour, semaine, mois par exemple). De même, l'utilisateur a la possibilité de définir un ou plusieurs numéros auquel une restriction spécifique est susceptible d'être appliquée, communication par communication ou sur les durées cumulées des communications pour une période fixée.

A titre d'exemple, l'utilisateur a donc la possibilité de fixer les restrictions suivantes:
→ 3mn pour chaque communication internationale
→ 1h par semaine pour les communications internationales
→ 5mn pour chaque communication régionale
→ 10mn pour chaque communication locale
→ 15mn par semaine pour les numéros 08 36 15
→ 5mn par jour pour le numéro N1...

Ce menu offre également la possibilité de définir un ou plusieurs numéros de téléphone auquel les restrictions ne sont pas appliquées (par exemple les numéros verts, le numéro de téléphone de la maison...)

Il permet également de prévoir un signal d'alarme émis un certain temps avant d'interrompre une communication pour avertir l'utilisateur. Dans un mode de réalisation avantageux de la présente invention, l'utilisateur a alors la possibilité de saisir un code de sécurité (qui est un code secret choisi par l'utilisateur) afin d'inhiber ou de réinitialiser la restriction en cours.

Enfin, ce menu permet de choisir le type d'affichage souhaité par l'utilisateur: affichage du temps restant ou du temps écoulé pour la communication en cours. Les durées cumulées des communications par catégorie sont par exemple accessibles à partir d'un menu "Compteur" du téléphone.

Dans certaines normes (notamment dans la norme de téléphonie cellulaire analogique AMPS) les communications sont facturées au niveau de l'émetteur et du récepteur. Un tel menu est alors avantageusement défini pour les communications entrantes et pour les communications sortantes.

Dans un mode de réalisation avantageux, l'accès à un tel menu est protégé par la saisie obligatoire du code de sécurité.

Les informations qui sont ainsi saisies par l'utilisateur sont automatiquement stockées sous forme de tables ou de variables dans la mémoire du microprocesseur 7.

Une table T1 indique pour chaque type de restriction i:
■ l'état actif ou inactif de la restriction,
■ la durée maximum autorisée DCi par communication,
■ un compteur CCi qui indique la durée restante pour la communication en cours,
■ la durée globale DTi par catégorie.
■ la période Pi définie pour la catégorie,
■ un compteur de durée CTi qui indique la durée restante pour la période en cours,
■ un compteur de période CPi qui comptabilise la partie de la période Pi qui reste à courir.

Sur la figure 2 on a représenté une telle table en reprenant l'exemple des pages 5 et 6: les quatres premières lignes de la table correspondent respectivement aux restrictions par communication, et aux restrictions par catégories: internationale, régionale, locale. La table T1 contient de plus des restrictions définies pour des numéros de téléphone N1, N2... et/ou pour des numéros de fiches de répertoire F1, F2...

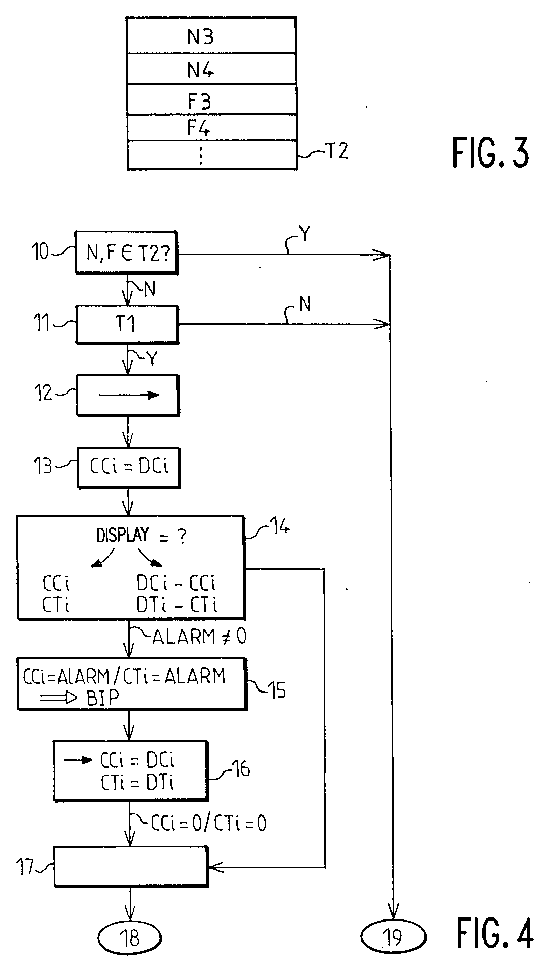

Sur la figure 3, on a représenté une table T2 qui contient la liste des numéros de téléphone N3, N4, et/ou des numéros de fiche de répertoire F3, F4 qui sont définis comme des exceptions auxquelles aucune restriction ne doit être appliquée.

De plus :
■ une variable ALARM indique le temps qui doit séparer l'émission éventuelle d'un signal d'alarme de l'interruption de la communication. Si cette variable a une valeur nulle, aucun signal d'alarme n'est émis.
■ Enfin une variable binaire AFFICH indique le type d'affichage choisi par l'utilisateur (temps restant ou temps écoulé).

Le procédé selon l'invention utilise notamment une tâche, dite tâche horloge, et une tâche dite tâche de gestion de la durée des communications. La tâche horloge utilise une horloge interne dont est doté le téléphone selon l'invention pour mettre automatiquement à jour les valeurs des compteurs CCi, CTi, CPi de la table T1. Cette tâche permet également de réinitialiser les compteurs CTi et CPi lorsque le compteur CPi arrive à échéance.

Toutefois, dans le cas où l'on ne définit pas de restriction par période, cette horloge interne n'est pas nécessaire. Le processeur du téléphone est en effet doté d'une tâche cyclique qui donne le temps écoulé lorsque le téléphone est sous tension.

Sur la figure 4 on a représenté sous forme d'organigramme et à titre d'exemple les étapes de la tâche de gestion de la durée des communications.

Cette tâche est activée lorsque l'utilisateur compose un numéro de téléphone N ou sélectionne une fiche F du répertoire. A la case 10, on vérifie alors si ce numéro ou cette fiche est contenu dans la table T2. Dans ce cas (branche Y sur la figure) le fonctionnement se poursuit à la case 19. Sinon (branche N sur la figure), il se poursuit à la case 11.
■ A la case 11, on détermine les restrictions applicables à ce numéro ou à cette fiche en fonction du contenu de la table T1, et , lorsqu'il s'agit d'un numéro de téléphone, en fonction du format de ce numéro. Si aucune restriction n'est activée (branche N), le fonctionnement se poursuit à la case 19. Sinon (branche Y) il se poursuit à la case 12.
■ A la case 12, on attend que l'établissement de la communication avec le correspondant soit détecté. Une telle détection est par exemple réalisée comme cela a été décrit dans la demande de brevet français enregistrée sous le numéro 9608621 et déposée par la demanderesse le 10 juillet 1996. Dès que l'établissement de la communication est détecté le fonctionnement se poursuit à la case 13.
■ A la case 13, on initialise le compteur CCi: CCi=DCi. Puis à la case 14, on vérifie le mode d'affichage demandé par l'utilisateur. Selon la valeur de la variable AFFICH, on affiche donc en permanence, soit la valeur des compteurs CCi et CTi, soit les valeurs DCi-CCi et DTi-CTi. Le fonctionnement se poursuit ensuite à la case 15 si la valeur de la variable ALARM est différente de zéro. Sinon il se poursuit à la case 17.
■ A la case 15, dès qu'un des compteurs CCi ou CTi a atteint la valeur ALARM, on émet un signal d'alarme. Le fonctionnement se poursuit alors à la case 16. A la case 16, si l' utilisateur saisit son code de sécurité, les compteurs CCi et CTi sont réinitialisés: CCi=DCi et CTi=DTi. Dès que l'un des compteurs CCi ou CTi arrive à échéance, le fonctionnement se poursuit à la case 17.
■ A la case 17, la communication en cours est interrompue. Le fonctionnement se termine ensuite à la case 18.
■ A la case 18, un message d'information est affiché.
■ A la case 19, l'appel est acheminé et traité de façon classique.

Dans un mode de réalisation avantageux de l'invention, des moyens sont prévus pour bloquer le rappel d'un numéro pour lequel la communication vient d'être interrompue. Pour cela, on vérifiera, par exemple, lorsqu'un numéro a été demandé, si ce numéro fait partie d'une liste des derniers numéros appelés. Si c'est le cas, l'appel ne sera pas acheminé.

L'invention n'est pas limitée au mode de réalisation qui vient d'être décrit à titre d'exemple. Elle s'applique notamment à tout type d'équipement téléphonique. Elle est susceptible de mettre en oeuvre un ou plusieurs critères de restriction de durée de communication parmi ceux qui viennent d'être décrits.

## Revendications

1. Equipement téléphonique comportant des moyens de contrôle de coût des communications téléphoniques, caractérisé en ce qu'il comporte:
■ des moyens permettant de fixer au moins un critère de restriction de durée applicable indépendamment à chaque communication,
■ des moyens pour affecter une durée maximum autorisée à chaque communication faisant l'objet d'une telle restriction,
■ des moyens permettant d'interrompre une communication lorsque la durée maximum qui lui est affectée est écoulée.

2. Equipement téléphonique selon la revendication 1, caractérisé en ce qu'il comporte des moyens pour fixer un critère de restriction de durée par catégorie, l'appartenance d'une communication à une catégorie étant déterminée à partir du numéro de téléphone du correspondant.

3. Equipement téléphonique selon l'une des revendications 1 ou 2, doté d'un répertoire contenant des fiches téléphoniques, caractérisé en ce qu'il comporte des moyens pour fixer au moins un critère de restriction de durée pour une ou plusieurs fiche dudit répertoire.

4. Equipement téléphonique selon l'une des revendications 1 à 3, caractérisé en ce qu'il comporte:
■ au moins un compteur, dit compteur de communication,
■ des moyens d'initialisation dudit compteur de communication, pour chaque communication faisant l'objet d'une restriction de durée, avec la durée maximum autorisée,
■ des moyens pour décrémenter ledit compteur de communication au fur et à mesure de la communication,
■ des moyens d'affichage de la valeur dudit compteur de communication.

5. Equipement téléphonique selon la revendication 2, caractérisé en ce qu'il comporte:
■ des moyens pour fixer au moins une période de temps,
■ des moyens de cumul des durées de communication par catégorie sur ladite période,
■ des moyens pour fixer une durée maximale autorisée pour ladite période,
■ des moyens permettant d'interrompre une communication appartenant à ladite catégorie lorsque la durée maximum affectée à cette catégorie est écoulée pour ladite période,
■ des moyens permettant de bloquer les communications appartenant à ladite catégorie lorsque la durée maximum affectée à cette catégorie est écoulée pour ladite période.

6. Procédé de contrôle de cout des communications téléphoniques, caractérisé en ce qu'il consiste:
■ à fixer au moins un critère de restriction de durée applicable indépendamment à chaque communication,
■ à affecter une durée maximum autorisée à chaque communication faisant l'objet d'une telle restriction,
■ à permettre d'interrompre une communication lorsque la durée maximum qui lui est affectée est écoulée.

7. Procédé selon la revendication 6, caractérisé en ce qu'il consiste à fixer un critère de restriction de durée par catégorie, l'appartenance d'une communication à une catégorie étant déterminée à partir du numéro de téléphone du correspondant.

8. Procédé selon l'une des revendications 6 ou 7, destiné à être mis en oeuvre sur un équipement doté d'un répertoire contenant des fiches téléphoniques, caractérisé en ce qu'il consiste à fixer au moins un critère de restriction de durée pour une ou plusieurs fiche dudit répertoire.

9. Procédé selon l'une des revendications 6 à 8, caractérisé en ce qu'il consiste:
■ à initialiser un compteur dit compteur de communication, pour chaque communication faisant l'objet d'une restriction de durée, avec la durée maximum autorisée,
■ à décrémenter ledit compteur de communication au fur et à mesure de la communication,
■ à afficher la valeur dudit compteur de communication.

10. Procédé selon la revendication 7, caractérisé en ce qu'il consiste:
■ à fixer au moins une période de temps,
■ à cumul des durées de communication par catégorie sur ladite période,
■ à fixer une durée maximale autorisée pour ladite période,
■ à permettre d'interrompre une communication appartenant à ladite catégorie lorsque la durée maximum affectée à cette catégorie est écoulée pour ladite période,
■ à permettre de bloquer les communications appartenant à ladite catégorie lorsque la durée maximum affectée à cette catégorie est écoulée pour ladite période.
